# EUROPEAN PATENT APPLICATION

(11) **EP 3 056 532 A1**
(43) Date of publication of application: **17.08.2016**
(21) Application number: 15157812.7
(22) Date of filing: 05.03.2015
(51) Int. Cl.: C08J 3/12, B02C 19/18, D01D 5/00, D01D 5/26, D21H 13/26, D01G 1/04

(54) **POWDER OF FRAGMENTS OF AT LEAST ONE POLYMERIC NANOFIBER**

(30) Priority: 12.02.2015 EP 15154846
(71) Applicant: Universität Bayreuth, 95440 Bayreuth (DE)
(72) Inventor: Greiner, Andreas Prof. Dr., 95444 Bayreuth (DE); Agarwal, Seema Prof. Dr, 35037 Marburg (DE); Langner, Markus, 95447 Bayreuth (DE)
(74) Representative: Dr. Gassner & Partner mbB

(57) **Abstract**

The invention concerns a powder of fragments of at least one polymeric nanofiber which fragments have a maximal average length of 0.12 mm.

## Description

The present invention concerns a powder of fragments of at least one polymeric nanofiber, a product comprising the powder, a use of the powder and a method for producing the powder.

It is known in the art to produce ultrathin polymer fibers by use of electrospinning. The diameters of these fibers can be in the range of few nanometers to few micrometers. Electrospinning can be used to produce a coating of a nonwoven fabric of nanofibers on a surface such as on the surface of a filter paper. A disadvantage of the production of such a surface coating by electrospinning is that it takes a relatively long time to produce such a coating. This results in a relatively small productivity. Furthermore, only products can be coated that can be brought in the electric field required for electrospinning.

Separation of the production of the nanofibers by electrospinning from the process of coating the surface of a product allows a fast coating that is independent from the presence of an electric field. In this way also products that cannot be brought into the electric field required for electrospinning can be coated. Furthermore, such a separated coating process can be adapted to the velocity of the production of the product to be coated. The velocity of the production of the coated product is not dependent from the velocity of the production of the coating by electrospinning.

From US 2005/0142973 A1 porous fibrous sheets, such as papers and nonwoven fabrics, are known. The porous fibrous sheets comprise nanofibers or a combination of wood pulp and nanofibers. The porous fibrous sheets are useful in end-uses requiring microbial barrier properties. The nanofibers may have a length between 0.19 mm to 10 mm. In an example the fibers are produced by fibrillating lyocell fibers having a length of 10 mm in water using a high-speed blender. The nanofibers can be used either in dry form or in the form of water slurry to make the porous fibrous sheet. An aqueous dispersion of nanofibers can be placed on a permeable screen and dewatered in a controlled way to form a high barrier layer. In one embodiment a porous fibrous paper-like sheet is prepared by wet-laying furnish comprising nanofibers and wood pulp to form a porous paper-like sheet. Fibrous sheet formed in this manner have the nanofibers and wood pulp fibers substantially uniformly distributed throughout the fibrous sheet. The nanofibers can also be deposited on a pre-formed paper layer. The porous fibrous sheet can be densified, e. g. by calendering the sheet or by compression in a press.

The problem to be solved by the present invention is to provide nanofibers in an alternative form that can be used to improve properties and the production of products, products comprising the nanofibers in alternative form, a use of these nanofibers as well as a method for producing these nanofibers.

The problem is solved by the features of independent claims 1, 8, 11 and 12. Embodiments are subject-matter of dependent claims 2 to 7, 9, 10 and 13 to 15.

The subject-matter of the invention is a powder of fragments of at least one nanofiber which fragments have a maximal average length of 0.12 mm, in particular a maximal average length of 0.11 mm, in particular a maximal average length of 0.10 mm. The fragments may be cylindrical. They may have a porous surface. They may consist of alternating thin and thicker segments. The fragments may have a branched or a radial structure, a core-shell structure or a hollow fiber structure.

The inventors of the present invention recognized that it is possible to produce fragments of nanofibers that are shorter than the fragments disclosed in US 2005/0142973 if the nanofibers are immersed in a liquid and chopped in a blender having a cutting unit when the liquid is cooled such that the nanofibers become brittle. They further recognized that these short fragments of nanofibers can be handled better than longer nanofiber fragments, e. g. because a dispersion of these nanofibers having a given concentration of the nanofibers by weight is less viscous than a dispersion having the same concentration of nanofibers by weight, wherein the nanofibers are longer. A further effect of the little length of the fragments is that a dispersion of the powder in a liquid, such as water, water comprising a surfactant, an alcohol, ethanol, isopropanol, isobutanol or a mixture of at least two of these liquids, is very stable over a long period of time. "Stable" means that no or only little aggregation of the fragments and no precipitation of the fragments occurs, i. e. the dispersion remains homogeneous. The dispersion of the powder in the liquid may be stable for months or even years.

The maximal length of the fragments may be 0.15 mm, in particular 0.14 mm, in particular 0.13 mm, in particular 0.12 mm. The average diameter of the fragments may be in the range of 10 nm to 3000 nm, in particular in the range of 50 nm to 1000 nm, in particular in the range of 90 nm to 800 nm. The features of a product comprising the fragments of the at least one nanofiber are influenced by the ratio of the average length of the fragments to the average diameter of the fragments. Dispersions of fragments having the same average length and the same concentration of fragments per weight in any of the dispersions are the more viscous the bigger this ratio is. Furthermore, the absorptive and/or adsorptive effect of the fragments in a filter is the better the larger this value is. It has been found that good results can be achieved if this ratio is in the range of 20 to 500, in particular in the range of 30 to 300, in particular in the range of 40 to 200. The ratio can be at least 20, in particular at least 40, in particular at least 80, in particular at least 150, in particular at least 200, in particular at least 500, in particular at least 1000, in particular at least 2000, in particular at least 3000, in particular at least 4000, in particular at least 5000.

The nanofiber may be a nanofiber produced by an electrospinning process. The nanofiber may be produced from a polymer, a blend of polymers or a polymer composite. The polymer may be a homopolymer, in particular a latex based polymer, a block polymer, a block copolymer, a graft copolymer, a radial polymer, a highly branched polymer or a dendritic polymer. The softening temperature of the polymer, blend of polymers or polymer composite can be above 30°C. The nanofiber may comprise a polyimide, a polyamide, a polyester, polyacrylonitrile, polyethylene (PE), polyethylene terephthalate (PET), polypropylene (PP), polysulfone, poly(acrylonitrile/styrene/butadiene copolymer (ABS), polycarbonate, polyamideimide, polyesterimide, polyurethane, polyguanidine, polybiguanidines, chitosan, silk, recombinant silk, collagene, cross-linked polyamide carboxylic acid, polyamide carboxylic acid, polyvinyl alcohol, polydiallyldimethylammonium chloride, polyvinylpyrrolidone, polystyrene (PS), polymethylmethacrylate (PMMA), a polycationic polymer, a polyanionic polymer, polycaprolactone, polylactic acid (PLA), poly-L-lactic acid (PLLA), or poly acrylic acid. The polycationic and the polyanionic polymer can function as ion exchanger.

The powder may be dispersed in a gas, such as air, in a liquid thus forming a dispersion, in a further dispersion, or in a molten mass of a thermoplastic polymer such as polypropylene. In the molten mass the powder can be dispersed by kneading. The dispersion in the gas can be achieved by blowing the gas into the powder or by nebulizing a dispersion of the powder with the gas. The further dispersion may be a dispersion of other fibers such as cellulose fibers. The liquid in which the powder of the invention is dispersed can be any liquid which is not able to dissolve the polymer, the blend of polymers or polymer composite. The temperature, at which the powder may be dispersed in the gas or liquid, may be in the range of minus 200°C to plus 50°C. The liquid may be or comprise water, water comprising a surfactant, an alcohol, ethanol, isopropanol, isobutanol, dimethylformamide (DMF), sulfolane, N-methylcaprolactam, N-methyl-2-pyrrolidone (NMP), tetrahydrofuran (THF), ethylene carbonate, propylene carbonate, a solution, a mixture of at least two of the aforementioned liquids, or a supercritical liquid such as supercritical carbon dioxide. The concentration of the powder in the liquid may be up to 30% by weight. The powder dispersed in the liquid can be processed by electrospinning, spin-coating, wet spinning, film extraction, film dipping, film spraying or doctor blading, each of the processes optionally followed by soaking and/or suction of the liquid.

The invention further concerns a product comprising the powder according to the invention, wherein the powder is coated on a surface of the product or incorporated in the product. The product may be a paint, in particular a dispersion paint. In such a paint it is important that dispersion is stable and no precipitation of the fragments occurs. This is achieved by the shortness of the fragments. The effect of the powder in the paint is that it makes the paint thixotropic thus preventing the formation of tears when applying the paint. The inventors found that this effect can be achieved if only 0.5% by weight of the powder is added to the paint. Normally 15% to 20% by weight of a mean for making the paint thixotropic are needed. The effect of such a high concentration is that the paint, in particular a clear paint, becomes turbid. By use of only 0.5% by weight of the powder according to the invention the same thixotropic effect is achieved but without turbidity of the paint.

A product coated with the powder on its surface may be achieved by blowing the powder dispersed in the gas onto a sticky surface of a product which surface may cure after application of the powder such that it loses its stickiness. Another possibility to apply the powder to the surface of the product is by flock coating which is also known as flocking.

A product coated with the powder on its surface can also be produced by use of a dispersion of the powder in a liquid or in a further dispersion. The dispersed powder can be applied to the surface by spraying, by painting, by spin-coating, by electrocoating, by electrospinning, dipping, or doctor blading. The inventors found that the application of the dispersed powder to a surface results in a nonwoven fabric on the surface of the product when the liquid of the dispersion or a dispersant of the further dispersion is removed by evaporation, soaking and/or suction. Surprisingly, the inventors found that the features of the coated surface produced in this way are very similar to those of a surface coated by electrospinning, in particular when analyzing the structure by electron microscopy and when comparing the function of such a surface as a filter. The inventors found that a nonwoven fabric produced by use of the powder according to the invention is well suited for filtration purposes, in particular if it is not densified or pressed such that the integrity of the structure is preserved.

The product may comprise a composite of the powder and further fibers. The further fibers may comprise cellulose fibers. The product can be a filter which is produced from a dispersion comprising cellulose fibers and the powder of the invention, in particular the powder of the invention dispersed in the liquid. A filter produced from such a dispersion or such dispersions may have pores, wherein the surfaces of these pores comprise the fragments of the nanofiber. The fragments of the nanofiber may extend from the surface such that the surface area of such a filter and therewith the efficiency of the filter is increased drastically.

The invention further concerns the use of the powder according to the invention for the production of a product according to the invention, wherein the powder is dispersed in the liquid or the further dispersion and applied in dispersed form to a surface of the product followed by evaporation, soaking and/or suction of the liquid or a dispersant of the further dispersion to produce a coating, in particular a coating in the form of a nonwoven fabric. Alternatively, the powder is incorporated in the molten mass, the liquid or the further dispersion, which molten mass, liquid or further dispersion is the product, e. g. a paint, or from which molten mass, liquid or further dispersion the product is formed, e. g. in the form of a nonwoven fabric or a plastic article formed from the molten mass and having a surface comprising the fragments of the nanofiber. To the molten mass, the liquid or the further dispersion an additive to be dissolved or dispersed therein may be added prior, during or after dispersing the powder therein. Such an additive may comprise an antibacterial substance, a superhydrophobic substance, a superhydrophilic substance, a swelling substance able to absorb or adsorb water, a gas, a solvent or an oil, a sensoric substance, an adhesive to improve adhesion of the fragments, self-restoring materials to restore damages of the nonwoven fabric, a medicament, a contrast agent, a phase-change material for storing energy, a photoconductive substance for generating energy, an electroluminescent substance for an electrical generation of light, a photoluminescent substance for an optical generation of light, a substance for scattering, absorption or reflection of electromagnetic radiation such as X-radiation, UV-radiation, visible light, or infrared radiation, an antistatic substance, a sound wave absorbing substance, a catalyst, a viscosity or friction modifying substance, a mechanically stabilizing substance, a flexibility increasing substance, organisms like cells or bacteria, viruses, nanoparticles, carbon nanotubes, or a zeolite. The additive may be dissolved, microencapsulated or dispersed or it may be present in the form of micelles in the liquid, further dispersion or molten mass. The dispersed additive may be present in the form of spheres, rods, stars or branches. It is also possible that mixtures of additives are present in the liquid, molten mass or the further dispersion.

For the preparation of surface coatings it is also possible to use different dispersions of the powder with or without an additive, wherein the different dispersions differ with respect to the chemical nature of the fragments, the average diameter of the fragments, the geometry of the fragments or the porosity of the fragments. The fragments can be mixed with fibers or particles of metal, cellulose, carbon and/or ceramics. The powder of the invention can be sputtered or introduced in a molten mass for polymer extrusion, polymer kneading, blown film extrusion, molten fiber spinning, electrospinning or melt blowing. It is also possible to use the powder directly for polymer extrusion, polymer kneading, blown film extrusion, molten fiber spinning, melt blowing or electrospinning to produce composites having very different compositions. The fragments may carry functional substances or serve for a mechanical enforcement or modify optical, electrical or isolating features of the product comprising the fragments. The powder according to the invention may be used for the production of a nonwoven fabric which can be used for the production of a filter, a membrane or a textile.

The powder of the invention may be used for modifying surfaces of metals, glasses, ceramics, woven polymers, nonwoven polymers, nonwoven glass, bioglass, nonwoven ceramics, woven ceramics, nonwoven carbon fibers, woven carbon fibers, surfaces of plants, skin, tissue, organs and teeth.

Furthermore, the powder according to the invention can be used for the production of filters, in particular air filters, particle filters, coalescing filters, water filters, oil filters, and membranes for the separation of substances. Furthermore, the powder according to the invention can be used for enforcement of metals, glasses, polymers, films, foils, fibers, structural elements and glues. In addition the powder according to the invention can be used in the field of plant protection as a carrier of active agents or in the modification of textiles as carrier of functional agents or for the enforcement of textiles or the modification of surfaces of textiles.

The invention further concerns a method for producing the powder according to the invention, wherein the at least one nanofiber is immersed in the liquid or in a further liquid, which liquid or further liquid has a temperature which is maximally 15°C, in particular maximally 10°C, in particular maximally 5°C, in particular maximally 0°C, in particular maximally minus 5°C, in particular maximally minus 10°C, in particular maximally minus 15°C, in particular maximally minus 20°C. The immersed nanofiber is reduced to the fragments by use of a blender having a cutting unit, wherein the blender is operated until the fragments having a maximal average length of 0.12 mm, in particular 0.11 mm, in particular 0.10 mm have formed in the liquid or further liquid. The nanofibers may be immersed as a fiber as such or in form of a woven or nonwoven fabric or a rope made of the nanofiber or nanofibers or in the form of pieces of the nanofiber as such, the woven or nonwoven material or the rope. The liquid or the further liquid may be a mixture of other liquids. The inventors found that the fiber fragments aggregate or adhere to each other when it is tried to reduce the nanofiber to the fragments at room temperature. This may be caused by a high temperature generated at the cutting edge of the nanofiber by the rotating cutting unit of the blender when cutting the nanofiber. The reason for the low temperature is that such a temperature prevents such an aggregation or adhesion and results in the embrittlement of the nanofiber. The cooling of the nanofiber allows the generation of fragments having a maximal average length of 0.12 mm or even shorter. The first result of performing this method is the powder dispersed in the liquid or the further liquid. This dispersion can be used for the aforementioned purposes in which a dispersion of the powder is used. If a dry powder shall be produced the liquid or the further liquid can be removed after the formation of the fragments by evaporation, soaking, suction, filtration and/or freeze drying.

The liquid or the further liquid may be a mixture of at least two of ethanol, isopropanol and water. The temperature may be in a range of minus 200°C to 15°C, in particular in the range of minus 150°C to 0°C, in particular in the range of minus 110°C to minus 5°C, in particular in the range of minus 85°C to minus 15°C, in particular in the range of minus 60°C to minus 25°C.

### Embodiments of the invention:

- Fig. 1: shows a SEM micrograph of a powder according to the invention comprising fragments of polyimide nanofibers.
- Fig. 2a and 2b: show SEM micrographs of a blend of molten polypropylene with incorporated polyimide nanofibers.
- Fig. 3a and 3b: show a composite of cellulose fibers and polyimide nanofibers.
- Fig. 4a, 4b and 4c: show SEM micrographs of the composite of Fig. 3a and 3b.
- Fig. 5: shows a digital micrograph of a nonwoven fabric made of poly-amide carboxylic acid nanofiber fragments dispersed in a liquid.
- Fig. 6: shows a digital micrograph of a nonwoven fabric made of polyamide carboxylic acid nanofibers produced directly by electrospinning.
- Fig. 7: is a graph showing the deposition of aerosol as a function of the size of aerosol droplets in a filter made of polyamide carboxylic acid nanofibers.
- Fig. 8: is a graph showing the pressure difference between two sides of filters made of polyamide carboxylic acid nanofibers as a function of the mass per unit area of the filters.

### Example 1:

### Preparation of a powder of polyimide nanofibers dispersed in a liquid

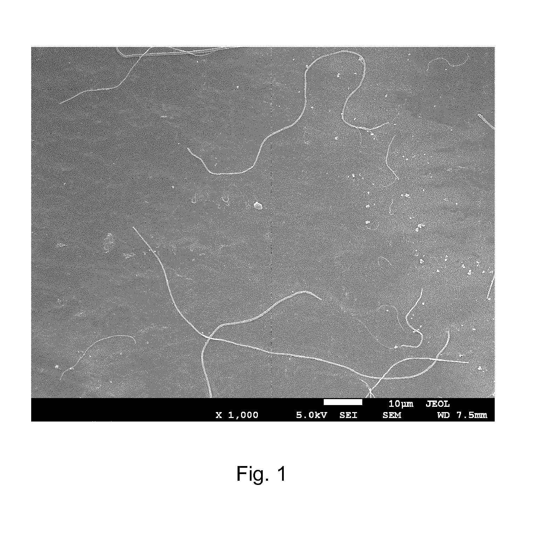

A fiber mat made of electrospun polyimide (Kapton^{®}, DuPont) nanofibers were cut in 5 x 5 cm pieces and put in a blender having a cutting unit. A mixture of 2-propanol and water in the ratio 40 : 60 (wt : wt) in a beaker glass was cooled down by use of liquid nitrogen nearly to its solidification temperature such that it is barely liquid. The mixture was poured into the blender and mixed with the fiber mat pieces two times for one minute. Afterwards the resulting dispersion in the 2-propanol-water-mixture was allowed to warm up to room temperature. The generated fragments of nanofibers had an average length of about 0.1 mm. The dispersion was homogenous and remained stable for several months. The dispersion may be dried by evaporation, soaking, filtration, suction and/or freeze drying. The dried powder generated in this way can be dispersed again in a liquid up to a concentration of 30% by weight. Fig. 1 shows a SEM micrograph of polyimide nanofiber fragments generated in this way.

### Example 2:

2 ml of the dispersion produced as described in Example 1 were applied to polyamide and polyester tissues and spreaded by doctor blading. After evaporation of the dispersant a tissue coated with a nonwoven fabric of the polyimide nanofibers was obtained.

### Example 3:

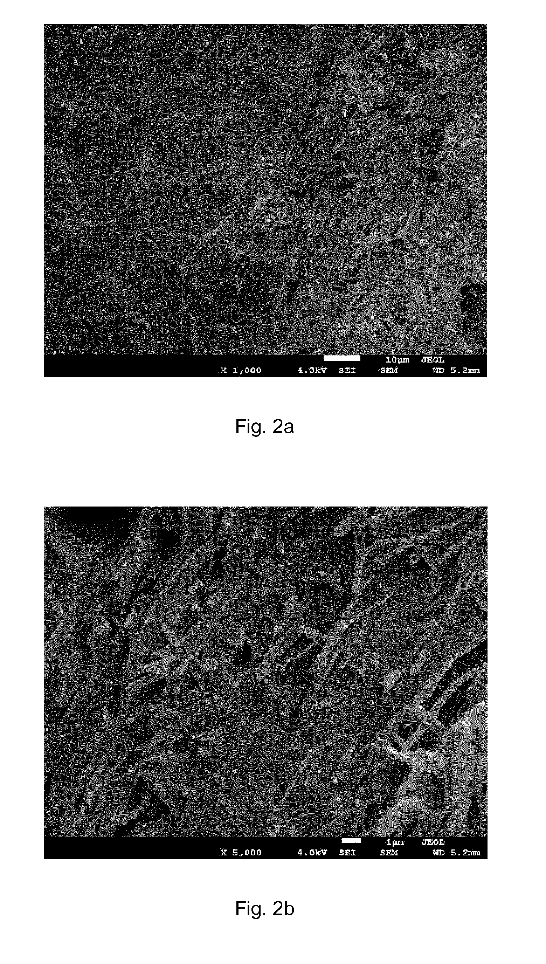

1 g of the powder of fragments of polyimide fibers produced as described in Example 1 were mixed with 50 g polypropylene in a kneader at 180°C for 30 minutes. A yellow blend of polypropylene and polyimide fiber fragments was obtained. At breaking edges of the blend the fragments could be seen by means of a scanning electron microscope (SEM). SEM micrographs of such a breaking edge are shown in Fig. 2a (1000-fold magnification) and Fig. 2b (5000-fold magnification). As can be seen from these micrographs the fragments of the nanofibers are distributed homogenously in the blend. Up to now such a homogenous distribution was not achieved with electrospun nanofibers.

### Example 4:

### Preparation of a fiber composite of cellulose and the powder according to the invention

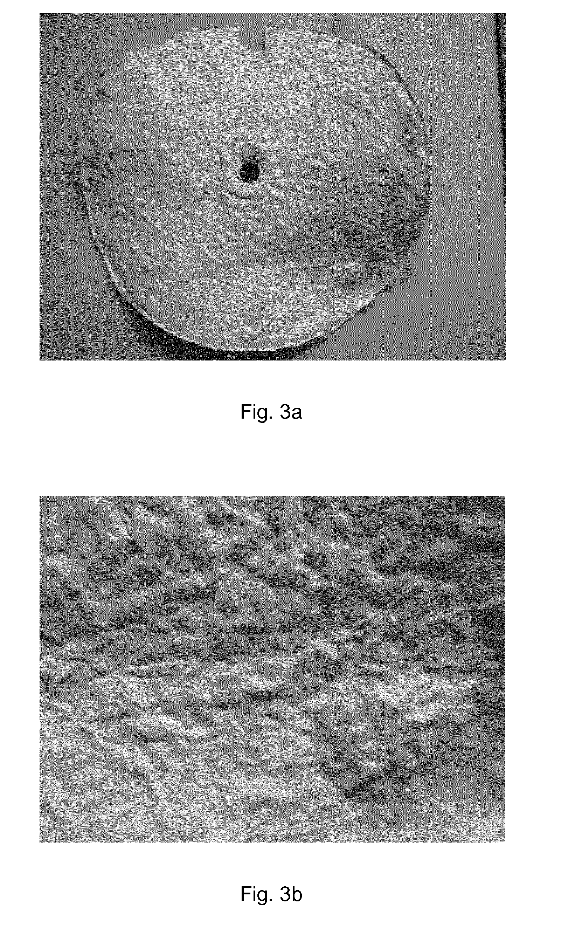

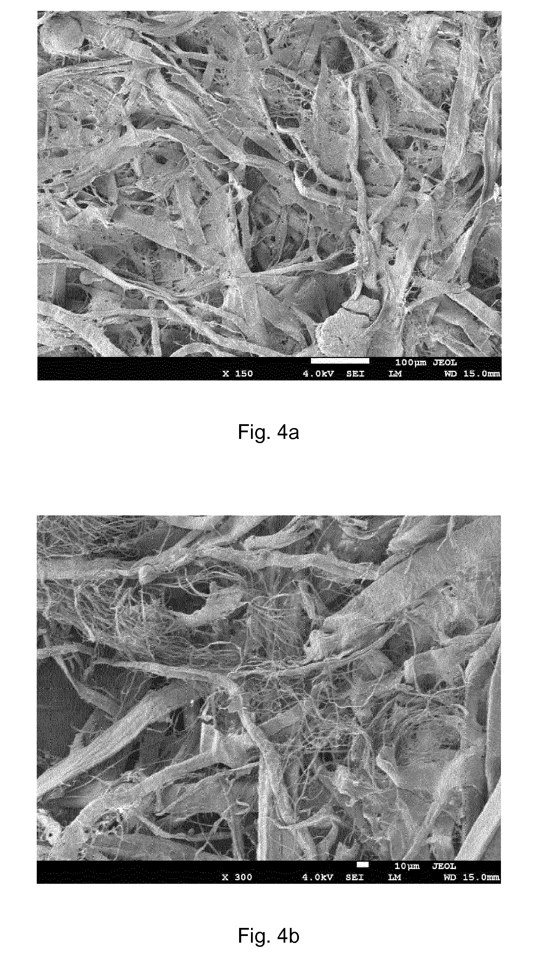

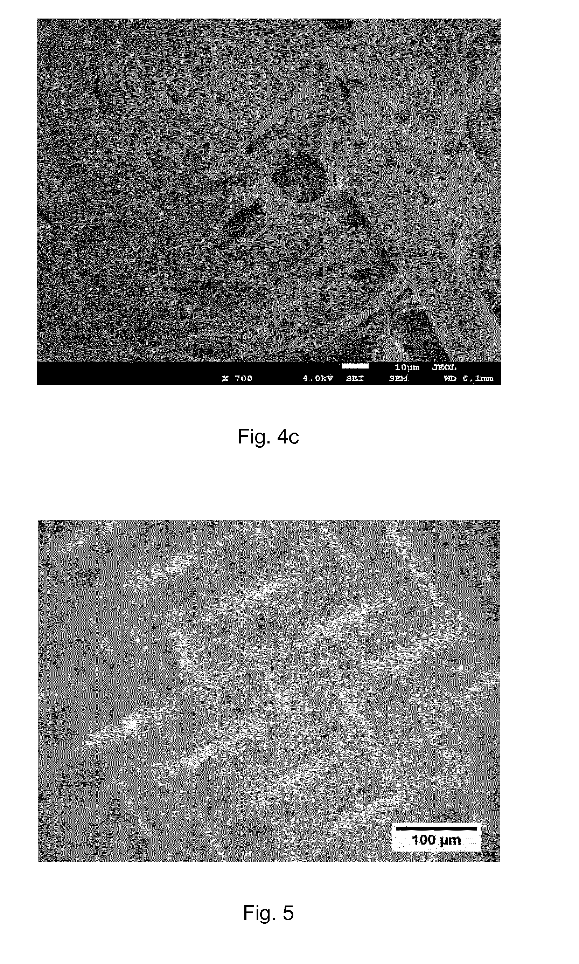

A powder of fragments of polyimide nanofibers was produced as described in Example 1 by dispersing 2 g of nanofibers in 800 ml of a mixture of 2-propanol and water in a ratio of 40 : 60 (wt : wt). Furthermore, cellulose in the form of paper was fragmented and soaked in 1000 ml water by stirring resulting in a fiber slurry. To this slurry 100 ml of the polyimide dispersion were added and mixed. The resulting dispersion was poured on a sieve. After the liquid run through the sieve the resulting mat was pressed with a stamp and thus densified and consolidated. The resulting mat was dried at 60°C. Fig. 3a shows the mat in total and Fig. 3b a microscopic photograph of the surface of the mat. Figures 4a, 4b and 4c show SEM micrographs of the mat in 150-fold (Fig. 4a), 300-fold (Fig. 4b) and 700-fold (Fig. 4c) magnification. From Figs. 4a to 4c it can be seen that the relatively thick cellulose fibers are surrounded by the polyimide-nanofiber fragments.

### Example 5:

### Preparation of nonwoven filter layers on stainless steel grids

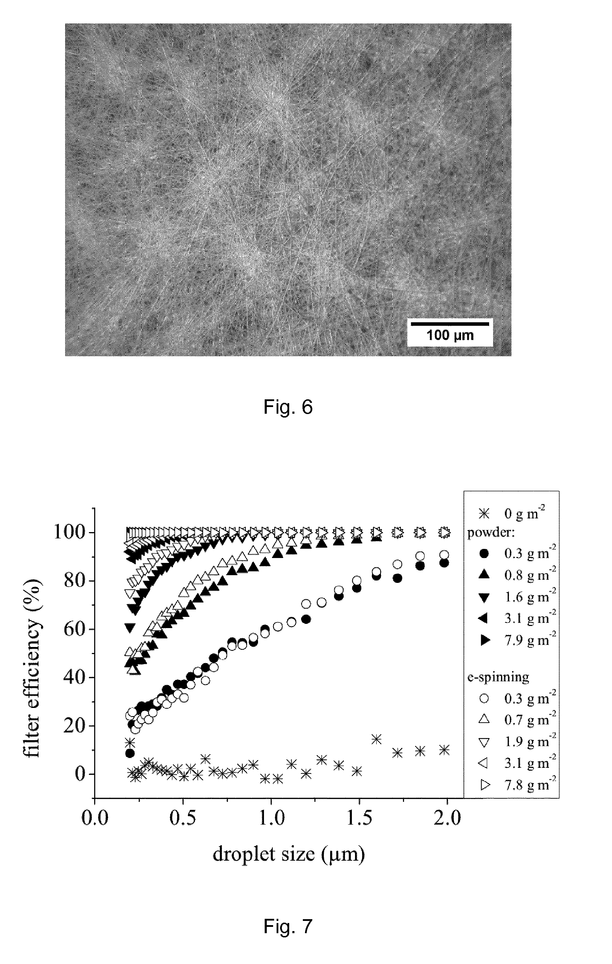

Polyamide carboxylic acid nanofibers were obtained by electrospinning from a polyamide carboxylic acid solution in dimethylacetamide. 2.4 g of the polyamide carboxylic acid (PAC) nanofibers were fragmentated in a solution of 600 ml 2-propanol and 1000 ml deionised water by means of a blender having a cutting unit at minus 18°C. For the production of a nonwoven filter layer of 3.1 mg/mm² 100 ml of the PAC-dispersion obtained in this way were diluted with 150 ml of a mixture of 600 ml 2-propanol and 1000 ml deionised water to achieve a nanofiber concentration of 1 g/ml. To this solution 1.5 ml of a 10% by weight polyvinyl alcohol solution were added to improve adhesion on the substrate. 20 ml of this solution were diluted with 400 ml of the solution of 600 ml 2-propanol and 1000 ml deionised water. The resulting dispersion was sucked through a 325 mesh stainless steel grid having a diameter of 90 mm. In this way the steel grid was coated with a nonwoven fabric. The grid was dried at 40°C and 25 mbar for 18 hours. Fig. 5 shows a digital micrograph of the nonwoven filter layer formed on the grid. Nonwoven filter layers having different masses per unit area are produced in an analogues manner. For comparison with these filter layers nonwoven filter layers having the same masses per area unit were produced by direct electrospinning on the stainless steel grids. For this purpose 5.45 g polyamide carboxylic acid were dissolved in 7.6 ml N,N-dimethylformamide by steering at room temperature. The resulting solution was electrospun with a velocity of 0.22 ml per hour at 22°C, 24% relative air humidity at a field strength of 20 kV by means of a one needle device having a cannula diameter of 0.9 mm with a distance between the electrodes of 26 cm onto a 325 mesh stainless steel grid (90 mm diameter) until 3.1 mg/m² were achieved. Fig. 6 shows a digital micrograph of the resulting nonwoven structure. Nonwoven filter layers having different masses per unit area were produced analogously by electrospinning. The features of both types of filters produced on the grids were compared by use of the filter test system MFP 2000 of the company Palas GmbH, Karlsruhe, Germany. In the essay di(2-ethylhexyl)-sebacate (DEHS) were used as aerosol having droplet sizes from 0.250 µm to 2.0 µm at a constant flow of 8.5 l/min. The resulting measured values for the deposition of the aerosol droplets on the filters as a function of different masses per area unit of the nonwoven filters are shown for both types of filters in Fig. 7. Fig. 7 clearly shows that the deposition of the aerosols and therewith the efficiency of the filters is very similar independent whether a filter was produced by electrospinning ("e-spinning" in Fig. 7) or by use of the dispersed powder ("powder" in Fig. 7) according to the invention.

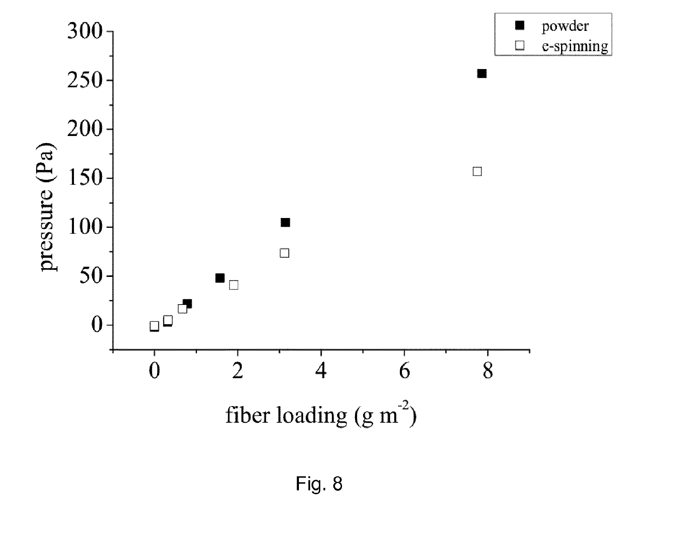

In a further essay the pressure difference between both sides of filters passed through by a gas stream was measured. The result is shown in Fig. 8 as a function of the masses per area unit of the nonwoven filters. Fig. 8 shows that the differences of the pressures of both kinds of filters were very similar. This essay shows that the features of a nonwoven structure produced by use of a dispersion of the powder according to the invention ("powder" in Fig. 8) are very similar to the features of a nonwoven structure produced by electrospinning ("e-spinning" in Fig. 8).

## Claims

1. Powder of fragments of at least one polymeric nanofiber which fragments have a maximal average length of 0.12 mm.

2. Powder according to claim 1, wherein the maximal length of the fragments is 0.15 mm.

3. Powder according to claim 1 or 2, wherein the average diameter of the fragments is in the range of 10 nm to 3000 nm.

4. Powder according to any of the preceding claims, wherein the nanofiber is produced by an electrospinning process.

5. Powder according to any of the preceding claims, wherein the nanofiber comprises a polyimide, a polyamide, a polyester, polyacrylonitrile, polyethylene (PE), polyethylene terephthalate (PET), polypropylene (PP), polysulfone, poly(acrylonitrile/styrene/butadiene copolymer (ABS), polycarbonate, polyamideimide, polyesterimide, polyurethane, polyguanidine, polybiguanidines, chitosan, silk, recombinant silk, collagene, cross-linked polyamide carboxylic acid, polyamide carboxylic acid, polyvinyl alcohol, polydiallyldimethylammonium chloride, polyvinylpyrrolidone, polystyrene (PS), polymethylmethacrylate (PMMA), a polycationic polymer, a polyanionic polymer, polycaprolactone, polylactic acid (PLA), poly-L-lactic acid (PLLA), or poly acrylic acid.

6. Powder according to any of the preceding claims, wherein the powder is dispersed in a gas, in a liquid thus forming a dispersion, in a further dispersion, or in a molten mass of a thermoplastic polymer.

7. Powder according to claim 6, wherein the gas is air and the liquid is or comprises water, water comprising a surfactant, an alcohol, ethanol, isopropanol, isobutanol, dimethylformamide (DMF), sulfolane, N-methylcaprolactam, N-methyl-2-pyrrolidone (NMP), tetrahydrofuran (THF), ethylene carbonate, propylene carbonate, a solution, a mixture of at least two of the aforementioned liquids, a supercritical liquid or supercritical carbon dioxide.

8. Product comprising the powder according to any of the preceding claims, wherein the powder is coated on a surface of the product or incorporated in the product.

9. Product according to claim 8, wherein the product comprises a composite of the powder and further fibers.

10. Product according to claim 9, wherein the further fibers comprise cellulose fibers.

11. Use of the powder according any of the preceding claims for the production of a product according to any of claims 8 to 10, wherein the powder is dispersed in the liquid or the further dispersion and applied in dispersed form to a surface of the product followed by evaporation, soaking and/or suction of the liquid or a dispersant of the further dispersion to produce a coating or wherein the powder is incorporated in the molten mass, the liquid or the further dispersion, which molten mass, liquid or further dispersion is the product, or from which molten mass, liquid or further dispersion the product is formed.

12. Method for producing the powder according to any of the preceding claims, wherein the at least one nanofiber is immersed in the liquid or in a further liquid which liquid or further liquid has a temperature which is maximally 15°C, wherein the immersed nanofiber is reduced to the fragments by use of a blender having a cutting unit, wherein the blender is operated until the fragments having a maximal average length of 0.12 mm have formed in the liquid or further liquid.

13. Method according to claim 12, wherein the liquid or further liquid is removed after the formation of the fragments by evaporation, soaking, suction, filtration and/or freeze drying.

14. Method according to claim 12 or 13, wherein the liquid or the further liquid is a mixture of at least two of ethanol, isopropanol and water.

15. Method according to any of claims 12 to 14, wherein the temperature is in a range of minus 200°C to 15°C.
